## Europäisches Patentamt
## European Patent Office
## Office européen des brevets

(19)

(11) Veröffentlichungsnummer: **0 158 776**
**B1**

(12) **EUROPÄISCHE PATENTSCHRIFT**

(45) Veröffentlichungstag der Patentschrift:
**14.09.88**

(51) Int. Cl.⁴: **F 16 K 17/04**

(21) Anmeldenummer: **85101138.7**

(22) Anmeldetag: **04.02.85**

(54) **Sicherheitsventil.**

(30) Priorität: **14.04.84 DE 3414289**

(43) Veröffentlichungstag der Anmeldung:
**23.10.85 Patentblatt 85/43**

(45) Bekanntmachung des Hinweises auf die Patenterteilung:
**14.09.88 Patentblatt 88/37**

(84) Benannte Vertragsstaaten:
**AT CH DE LI NL**

(56) Entgegenhaltungen:
**DE - A - 2 658 721**
**DE - A - 2 820 787**
**DE - U - 1 959 775**
**DE - U - 1 986 299**
**GB - A - 1 173 868**
**US - A - 3 487 852**

(73) Patentinhaber: **Drägerwerk Aktiengesellschaft,
Moislinger Allee 53-55, D-2400 Lübeck 1 (DE)**

(72) Erfinder: **Schwartz, Willi, Reecker Hauptstrasse 5,
D-2400 Lübeck (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Sicherheitsventil nach dem Oberbegriff des Anspruchs 1.

Ein derartiges Sicherheitsventil ist bereits aus der DE-U1 959 775 bekannt.

Dieses bekannte Sicherheitsventil besitzt ein oberhalb eines Ventilsitzes angeordnetes kegelförmiges Ventil-Verschlussorgan. Es ist mit einer zentralen Ventilspindel versehen, die eine im Gehäuse befestigte Membran dichtend durchsetzt und in der oberen Öffnung des Gehäuses in einem Schraubglied geführt ist. In dem Raum zwischen der Membran und dem Schraubglied drückt eine Ventilfeder mit dem Schliessdruck des Ventils das Ventilverschlussorgan auf den Ventilsitz. Das Ventil öffnet beim Überschreiten des Federdruckes. Das Schraubglied kann über ein Gewinde wahlweise tief in das Gehäuse hineingedreht und damit der Schliessdruck des Ventils bestimmt werden.

Durch den Verschlusskörper und die Ventilspindel ist ein Verbindungskanal vorgesehen, der den Strömungskanal mit der Federkammer verbindet. Der Verbindungskanal enthält eine Drossel. Bei einem Druckanstieg des Strömungsmediums im Strömungskanal setzt sich diese Druckerhöhung somit in die Federkammer fort und unterstützt die in Schliessrichtung wirkende Federkraft. Hierbei ist die über den Verbindungskanal beaufschlagte, in Schliessrichtung des Ventils wirkende Druckfläche kleiner als die der Öffnungskraft des Strömungsmittels ausgesetzte Druckfläche.

Erst bei allmählichem Überwiegen der in Öffnungsrichtung wirkenden Kraft des Strömungsmediums über die resultierende Federkraft wird das Ventil geöffnet. Bei einem plötzlichen Druckanstieg wird die Druckübertragung in die Federkammer wegen der Drossel zeitlich verzögert, so dass der Öffnungsdruck die entgegenwirkende Federkraft überwindet und das Ventil geöffnet wird.

Um bei einem schnellen Druckanstieg hohe Schliessdrücke zu ermöglichen, muss die Federkraft so bemessen sein, dass sie die volle Öffnungskraft ausgleichen kann. Dazu sind bei hohen Betriebsdrücken und den bei den vorgesehenen hohen Abblaseleistungen erforderlichen Querschnitten grosse und sperrige Ventilfedern erforderlich, die zu grossen Sicherheitsventilen mit entsprechendem Raumbedarf führen.

Aufgabe der Erfindung ist, ein Sicherheitsventil der oben genannten Art so zu verbessern, dass es auch für hohe Betriebsdrücke wenig sperrig baut.

Diese Aufgabe wird erfindungsgemäss durch die kennzeichnenden Merkmale des Anspruchs 1 gelöst.

Weitere Ausgestaltungen des Gegenstandes der Erfindung zeigen die Merkmale der Ansprüche 2 bis 4.

Die mit der Erfindung erzielten Vorteile bestehen insbesondere darin, dass es mit der Erzielung des Betriebsdruckes in der Federkammer und der dadurch auf den Querschnitt der Ventilspindel anstehenden zusätzlichen Ventilschliesskraft möglich ist, eine kleinere Ventilfeder vorzusehen. Sie muss nur noch gegen die Differenz aus der Öffnungskraft auf das Ventil im Druckraum und der Schliesskraft auf den Spindelquerschnitt in der Federkammer schliessen.

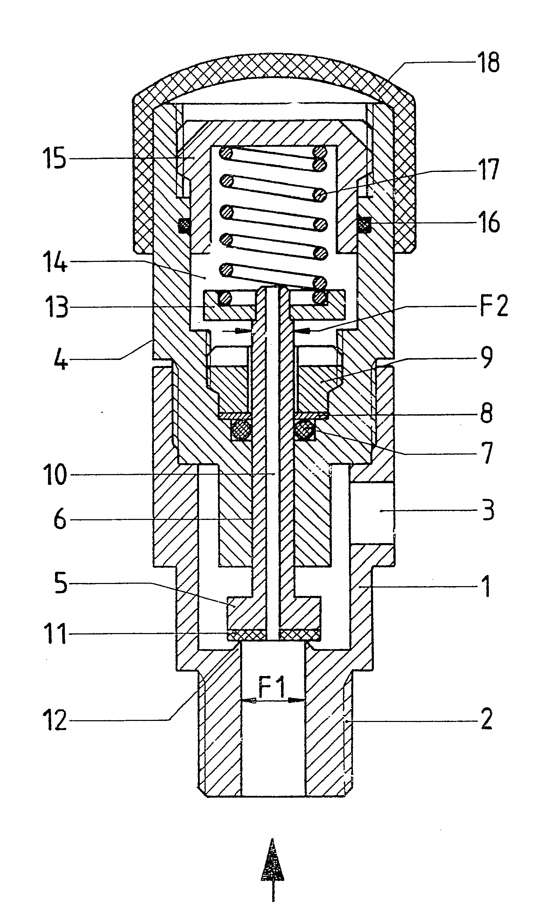

Ein Ausführungsbeispiel der Erfindung ist in der Zeichnung dargestellt und wird im folgenden beschrieben. Das Sicherheitsventil enthält ein Ventilgehäuse 1, mit dem es über einen Anschluss 2 an einen zu schützenden Druckraum angeschlossen ist. Eine Abblaseöffnung 3 ist mit der Umgebung oder einer Abgas-Sammelleitung verbunden. In das Ventilgehäuse 1 ist ein Federgehäuse 4 eingeschraubt. In diesem ist ein Dichtkolben 5 mit seiner sich anschliessenden Ventilspindel 6 längsverschiebbar geführt und dabei über eine Spindeldichtung 7 abgedichtet. Die Spindeldichtung 7 ist mittels Stützring 8 und Halteschraube 9 dicht gehalten. Der Dichtkolben 5 enthält eine durchgehende zentrale Bohrung 10 und besitzt eine Dichtfläche 11, die einen Ventilsitz 12 im Ventilgehäuse 1 verschliesst.

Das Ende der Ventilspindel 6 ragt in eine Federkammer 14 hinein und trägt einen Federteller 13. Die Federkammer 14 ist durch ein Schraubglied 15, das durch eine Dichtung 16 abgedichtet ist, verschlossen. Zwischen dem Federteller 13 und dem Schraubglied 15 ist eine Ventilfeder 17 angeordnet. Eine Kappe 18, die das Federgehäuse 4 abdeckt, schützt gegen Verstellung des Schraubgliedes 15.

Der Durchmesser der Ventilspindel 6 ist kleiner als der Durchmesser des Ventilsitzes 12, und zwar derart, dass die Ventilfläche $F1$ des Ventilsitzes 12 doppelt so gross wie der Querschnitt $F2$ der Ventilspindel 6 ist. Im Betrieb herrscht im Anschluss 2 und über die Bohrung 10 auch in der Federkammer 14 der Betriebsgasdruck. Die daraus auf die Ventilfläche $F1$ und den Querschnitt $F2$ ausgeübten Kräfte sind einander entgegengerichtet. Mit dem obigen Flächenverhältnis ist die auf dem Querschnitt $F2$ wirkende Kraft halb so gross wie die auf die Ventilfläche $F1$ wirkende Kraft. Als nach oben wirkende resultierende Kraft bleibt die Differenz, also die Hälfte der auf der Ventilfläche $F1$ wirkenden Kraft. Diese hält der Kraft der Ventilfeder 17 das Gleichgewicht. Die Ventilfeder 17 braucht nur nach der resultierenden Kraft ausgelegt zu werden, die hier im Verhältnis $F2 : F1$ kleiner ist als bei herkömmlichen Sicherheitsventilen.

## Patentansprüche

1. Sicherheitsventil mit einem Ventilverschlusteil, welches auf einem Ventilsitz (12) aufsitzend einen Druckraum sperrt, das eine Ventilfeder (17) und eine axiale Ventilspindel (6) besitzt, wobei die Ventilfeder (17) durch ein Schraubglied (15) einstellbar ist, wobei das Ventilverschlussteil ein Dichtkolben (5) mit einer sich anschliessenden und im Durchmesser kleineren Ventilspindel (66) ist, die an ihrem Ende in einer dichtend angeordneten Federkammer (14) einen Federteller (13) trägt, zwischen dem und dem die Federkammer (14) über eine Dichtung (16) verschliessenden Schraubglied (15) die Ventilfeder (17) angeordnet ist, wobei das Ventilverschlussteil mit einer zentralen Bohrung (10) versehen ist, welche den Druckraum mit der Federkammer verbindet, und wobei die sich aus dem Durchmesser des Ventilsitzes (12) ergebende Ventilfläche (F1) grösser ist als die sich aus dem Durchmesser der Ventilspindel (6) ergebenden Querschnittsfläche (F2), dadurch gekennzeichnet, dass die zentrale Bohrung (10) durchgängig ausgebildet ist und dass das Verhältnis der beiden Querschnittsflächen F1:F2 wie 2:1 ist.

2. Sicherheitsventil nach Anspruch 1, dadurch gekennzeichnet, dass die Ventilfeder (17) eine Schraubfeder ist.

3. Sicherheitsventil nach Anspruch 1 oder 2, dadurch gekennzeichnet, dass eine Kappe (18) das Federgehäuse (4) oberhalb des Schraubgliedes (15) abnehmbar abdeckt.

## Claims

1. Safety valve having a valve sealing portion which, sitting on a valve seat (12), blocks a pressure space and which has a valve spring (17) and an axial valve spindle (6), wherein the valve spring (17) is adjustable by means of a screw member (15); the valve sealing portion is a sealing plunger (5) with a connected valve spindle (6) which has a smaller diameter and bears at its end, in a spring chamber (14) arranged in a sealing manner, a spring plate (13), between which plate and the screw member (15) closing the spring chamber (14), by way of a seal (16), the valve spring (17) is arranged; the valve sealing portion is provided with a central bore hole (10) which connects the pressure space with the spring chamber; and the valve surface (F1) resulting from the diameter of the valve seat (127) is greater than the cross-sectional surface (F2) resulting from the diameter of the valve spindle (6), characterised in that the central bore hole (10) is developed so that it is a through hole and in that the ratio of the two cross-sectional surfaces F1:F2 is 2:1.

2. Safety valve according to claim 1, characterised in that the valve spring (17) is a helical spring.

3. Safety valve according to claim 1 or 2, characterised in that a cap (18) covers the spring housing (4) above the screw member (15), in a removable manner.

## Revendications

1. Soupape de sûreté avec un obturateur qui isole une chambre de pression en reposant sur un siège de soupape (12), et qui possède un ressort de soupape (17) et une tige de soupape axiale (6), le ressort de soupape (17) étant réglable à l'aide d'un élément vissé (15), l'obturateur étant un piston étanche (5) auquel se raccorde une tige de soupape (6) de diamètre plus petit, laquelle porte à son extrémité une cuvette de ressort (13) disposée de manière étanche dans une chambre de ressort (14), le ressort de soupape (17) étant disposé entre la cuvette de ressort (13) et l'élément vissé (15) fermant la chambre de ressort (14) par l'intermédiaire d'un joint d'étanchéité (16), l'obturateur étant muni d'un alésage central (10) qui relie la chambre de pression à la chambre de ressort, et la superficie de soupape (F1) résultant du diamètre du siège de soupape (12) étant supérieure à la superficie de section (F2) résultant du diamètre de la tige de soupage (6), caractérisée en ce que l'alésage central (10) est réalisé traversant, et en ce que le rapport entre les deux superficies de section F1:F2 est égal à 2:1.

2. Soupape de sécurité selon la revendication 1, caractérisée en ce que le ressort de soupape (17) est un ressort hélicoïdal.

3. Soupape de sécurité selon la revendication 1 ou 2, caractérisée en ce qu'un capuchon (18) recouvre de manière amovible le logement de ressort (4) au-dessus de l'élément vissé (15).